# DEMANDE DE BREVET EUROPEEN

(11) **EP 3 021 436 A1**
(43) Date de publication de la demande: **18.05.2016**
(21) Numéro de dépôt: 14290348.3
(22) Date de dépôt: 17.11.2014
(51) Int. Cl.: H02B 13/045

(54) **Arrangement d'enveloppe métallique apte à encapsuler un ensemble de composants électriques**

(71) Demandeur: Siemens Aktiengesellschaft, 80333 München (DE)
(72) Inventeur: Russi, Pascal, F-38470 Rovon (FR); Sanders, James, F-38560 Jarrie (FR)
(74) Mandataire: Maier, Daniel Oliver

(57) **Abrégé**

La présente invention décrit un arrangement d'enveloppe métallique sous forme d'une capsule ayant une paroi tubulaire (PT) selon un axe de révolution (G) principale horizontal et s'étendant sous une longueur totale définie entre une pre-mière et une deuxième sections d'extrémité (S1, S2), ladite enveloppe étant apte à encapsuler un ensemble de composants électriques disposés sous un volume (V) s'étendant de façon coaxiale à l'axe de révolution entre les deux sections d'extrémité,
caractérisé en ce que
l'enveloppe se compose d'au moins deux demi-enveloppes amovibles dont au moins une première demi-enveloppe (DE1) est composée au moins d'une partie supérieure (PS1) de la paroi tubulaire au-dessus de l'axe de révolution et d'une embase de maintien (EM1) de l'ensemble de composants électriques, la dite embase étant attenante à une seule (S1) des deux sections d'extrémité de l'enveloppe.

## Description

La présente invention concerne un arrangement d'enveloppe métallique apte à encapsuler un ensemble de composants électriques selon le préambule de la revendication 1.

Dans le domaine de la moyenne à la haute tension, des postes électriques sous forme d'arrangement d'enveloppe métallique (ou Gas Insulated Substation en anglais, communément désigné par la terminologie GIS) sont utilisés, de sorte qu'un ensemble de composants électriques y soit encapsulé. De nom-breuses références telles que DE102009015539A1 décrivent ainsi ce type d'arrangement d'enveloppe métallique sous forme de capsule ayant une paroi tubulaire selon un axe de révolution (par exemple horizontal) et s'étendant sous une longueur totale définie entre une première et une deuxième sections d'extrémité, ladite enveloppe étant apte à encapsuler un ensemble de composants électriques disposés sous un volume s'étendant de façon coaxiale à l'axe de révolution entre les deux sections d'extrémité.

En fonction du type de composants électriques à encapsuler, ceux-ci requièrent très souvent d'être toutefois accessibles, en particulier au niveau d'un passage dans la dite enveloppe ou d'une ouverture de la dite enveloppe. Cette accessibilité est requise afin de pouvoir assembler les composants électriques dans la dite enveloppe, ou même de réaliser des étapes de maintenances.

A ce titre, un document DE102011089391A1 décrit également un arrangement d'enveloppe métallique sous forme de capsule ayant une paroi tubulaire selon un axe de révolution (par exemple horizontal) et s'étendant sous une longueur totale définie entre une première et une deuxième sections d'extrémité, ladite enveloppe étant apte à encapsuler un ensemble de composants électriques disposés sous un volume s'étendant de façon coaxiale à l'axe de révolution entre les deux sections d'extrémité. Afin de pouvoir mieux accéder à l'ensemble de composants électriques, la paroi tubulaire comprend un couvercle plein en partie supérieure de la dite paroi, ledit couvercle étant amovible (par dévissage/vissage) de la paroi sous forme de « baignoire ». Une fois le couvercle démonté de la paroi, il est ainsi possible de faciliter un accès aux composants électriques en partie supérieure et latérale du volume défini par les dits composants. La partie inférieure du dit volume semble toutefois peu accessible. La forme en baignoire de la paroi est aussi assez volumineuse.

Le but de l'invention est donc de proposer un arrangement d'enveloppe métallique sous forme d'une capsule ayant une paroi tubulaire apte à encapsuler un ensemble de composants électriques à accessibilité interne accrue, en particulier sur une périphérie maximale entre la paroi tubulaire et ledit ensemble.

Enfin, l'arrangement proposé devrait rester compact, c'est-à-dire ne pas devoir présenter un encombrement trop volumineux afin de permettre un encapsulage au plus proche du volume défini par les composants électriques tout en y garantissant une bonne accessibilité comme susmentionné.

L'invention propose ainsi un tel arrangement d'enveloppe métallique selon la revendication 1.

A partir d'un arrangement d'enveloppe métallique sous forme d'une capsule ayant une paroi tubulaire selon un axe de révolution - supposé horizontale pour des raisons de clarté - et s'étendant sous une longueur totale définie entre une première et une deuxième sections d'extrémité, ladite enveloppe étant apte à encapsuler un ensemble de composants électriques disposés sous un volume s'étendant de façon coaxiale à l'axe de révolution entre les deux sections d'extrémité, l'arrangement selon l'invention est caractérisé en ce que l'enveloppe se compose d'au moins deux demi-enveloppes amovibles dont au moins une première demi-enveloppe est composée au moins d'une partie supérieure de la paroi tubulaire (c'est à-dire disposée au moins au-dessus de l'axe de révolution et sur au moins une portion de la longueur totale) et d'une embase de maintien de l'ensemble de composants électriques, la dite embase étant attenante à une seule des deux sections d'extrémité de l'enveloppe. Idéalement, la partie supérieure de la paroi tubulaire et l'embase qui composent la première demi-enveloppe forme un ensemble rigide au moins assemblable de manière monobloc, assimilable à une demi-enveloppe de forme principale en « 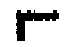 » (= « L » tourné ici de 90° dans le sens horaire).

De cette manière, toute la partie inférieure, des parties latérales et une section de la première demi-enveloppe sont ouvertes donc fort aisément accessibles, si la capsule est désassemblée. De plus, il est avantageusement possible de visualiser ainsi que d'accéder latéralement entre la paroi tubulaire supérieure et la surface supérieure du volume de composants électriques. Pour y parvenir, il suffit de prévoir que la partie supérieure de la paroi tubulaire présente avec le volume un interstice suffisant dimensionné pour y introduire au moins un bras d'un opérateur ou/et un quelconque autre outil (de préhension, coupage, collage, sertissage, vissage, nettoyage, etc.), idéalement pour faire accéder des moyens de liaison électrique depuis l'ensemble de composants électriques vers au et au travers d'au moins une ouverture de ladite partie supérieure de paroi. Il est donc avantageusement possible de choisir un interstice raisonnablement faible, mais suffisamment élevé afin de permettre un encapsulage au plus proche du volume défini par les composants électriques tout en y garantissant une bonne accessibilité comme susmentionné.

Un ensemble de sous-revendications présente également dés avantages de l'invention et sont plus amplement décrits au travers des exemples de réalisation fournis à l'aide de figures décrites :
- Figure 1 :: vue de côté d'une première demi-enveloppe selon l'invention,
- Figure 2 :: vue de dessus de la première demi-enveloppe selon l'invention et figure 1,
- Figure 3 :: vue de côté d'un premier arrangement selon l'invention comprenant la première demi-enveloppe couplée à une deuxième demi-enveloppe,
- Figure 4 :: vue de dessus du premier arrangement selon l'invention et figure 3 comprenant la première demi-enveloppe couplée à la deuxième demi-enveloppe,
- Figure 5 :: vue de côté d'un second arrangement schématique selon l'invention comprenant une première demi-enveloppe couplée à une deuxième demi-enveloppe,
- Figure 6 :: vue de côté d'un troisième arrangement schématique selon l'invention comprenant une première demi-enveloppe couplée à une deuxième demi-enveloppe,
- Figure 7 :: .vue de côté de la première demi-enveloppe selon l'invention comprenant un maintien d'un ensemble de transformation de courant en tant que composants électriques,
- Figure 8 :: vue de dessus de la première demi-enveloppe selon l'invention et figure 7.

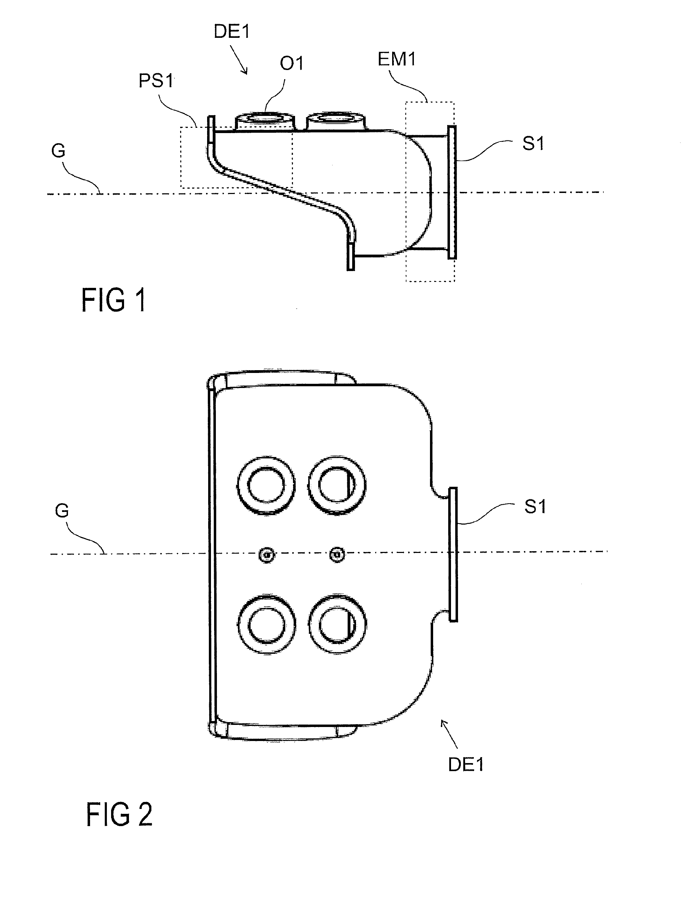

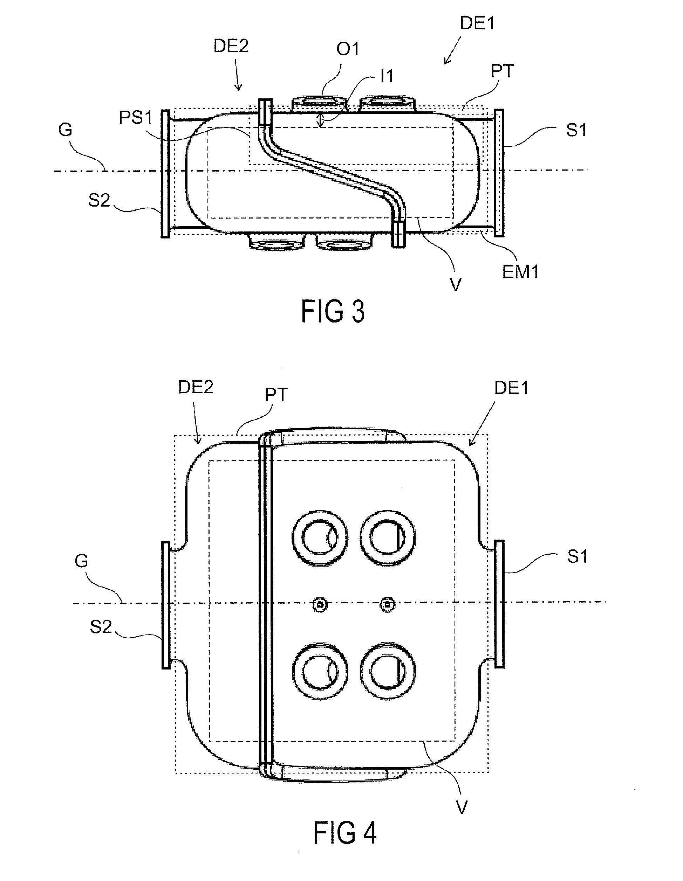

Avant de décrire plus spécifiquement les figures 1 et 2, référons nous aux figures 3 et 4 pour faciliter la compréhension plus générale de l'invention.

**Figure 3** représente une vue de côté d'un premier mode de réalisation d'un arrangement selon l'invention comprenant une première demi-enveloppe (DE1) couplée à une deuxième demi-enveloppe (DE2), et plus précisément un arrangement d'enveloppe métallique sous forme d'une capsule ayant une paroi tubulaire (PT) selon un axe de révolution (G) principale horizontale et s'étendant sous une longueur totale définie entre une première et une deuxième sections d'extrémité (S1, S2), ladite enveloppe étant apte à encapsuler un ensemble de composants électriques disposés sous un volume (V) s'étendant de façon coaxiale à l'axe de révolution entre les deux sections d'extrémité. L'enveloppe se compose ainsi d'au moins deux demi-enveloppes amovibles (DE1, DE2) - ici assemblées - dont au moins la première demi-enveloppe (DE1) est composée au moins d'une partie supérieure (PS1) de la paroi tubulaire au-dessus de l'axe de révolution (c'est à-dire disposée au moins au-dessus de la axe de révolution et sur au moins sur une portion de la longueur totale) et d'une embase de maintien (EM1) de l'ensemble de composants électriques disposés sous le volume (V), la dite embase étant attenante à une seule (S1) des deux sections d'extrémité de l'enveloppe.

L'arrangement selon la figure 3 prévoit aussi que la partie supérieure (PS1) de la paroi tubulaire présente avec le volume (V) un interstice (I1) suffisant dimensionné pour y introduire avantageusement au moins un bras d'un opérateur ou/et un quelconque autre outil requis, idéalement pour faire accéder des moyens de liaison électrique depuis l'ensemble de composants électriques vers au moins une ouverture (O1) de ladite partie supérieure de paroi.

L'embase de maintien (EM1), matérialisé par un rectangle en pointillés, est couplable à un moyen de fixation adapté à maintenir l'ensemble de composants électriques sous le volume (V). Ce moyen de fixation peut être intégré et solidarisé dans une ouverture prévue en section (S1).

**Figure 4** représente une vue de dessus du premier arrangement selon figure 3 comprenant la première demi-enveloppe (DE1) couplée à la deuxième demi-enveloppe (DE2). On peut remarquer que la paroi tubulaire (PT) n'a pas dans cet exemple de capsule une section circulaire, mais quasi ovale. Toute autre forme de section pourrait être envisagée de manière à encapsuler le volume (V) sous une enveloppe de taille minimale, pour être peu encombrante.

**Figure 1** présente plus spécifiquement enfin une vue de côté de la première demi-enveloppe (DE1) selon l'invention selon les figures 3 et 4, alors que les deux demi-enveloppes de la capsule des figures 3 et 4 est sous une forme désassemblée, par exemple afin de venir y disposer des composants électriques sous le volume (V) susmentionné.

**Figure 2** présente une vue de dessus de la première demi-enveloppe (DE1) selon l'invention et figure 1.

Les configurations des demi-enveloppes (DE1, DE2) selon les figures 1 à 4 présentent un avantage de conception : les deux demi-enveloppes (DE1, DE2) ont une géométrie identique, ce qui rend avantageusement leur fabrication plus universelle.

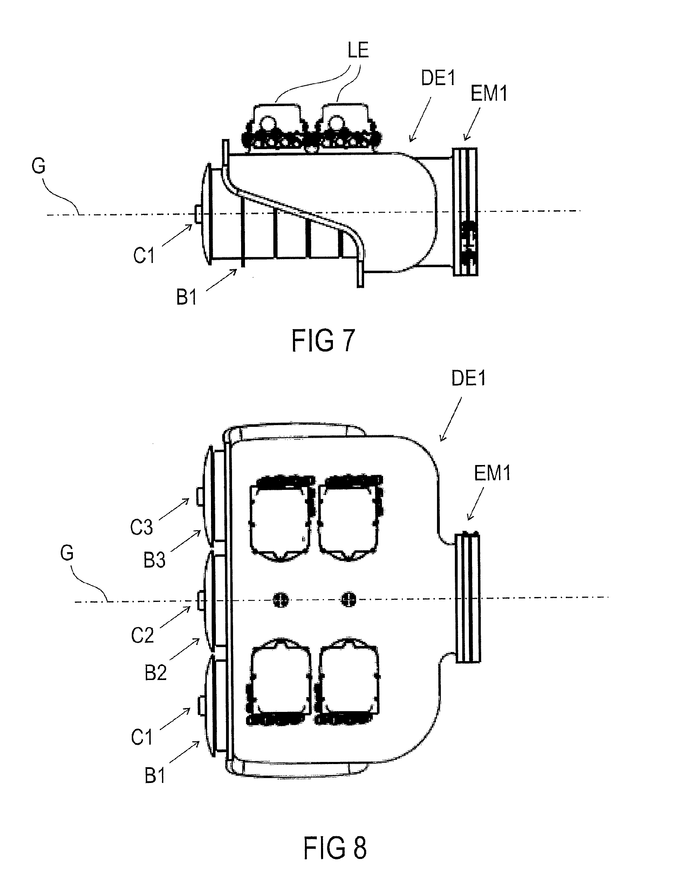

Afin de comprendre une disposition avantageuse de composants électriques dans le volume (V), prenons l'exemple des **figures 7 et 8** présentant respectivement une vue de côté et une vue de dessus d'un des arrangements et sa première demi-enveloppe (DE1) selon l'invention et selon une des figures 1 à 4, et pour lequel l'ensemble de composants électriques comprend un ensemble de transformation électrique de courant, constitué par :
- au moins un conducteur électrique (C1, C2, C3) longiligne étant coaxialement disposé à l'axe de révolution de l'enveloppe et dont une extrémité est solidarisée à l'embase de maintien (EM1),
- au moins une bobine (B1, B2, B3) de transformation de courant étant disposée autour du conducteur et recouvrant une majeure longueur du conducteur électrique.

Pour cet ensemble de transformation électrique de courant, il est requis de disposer les conducteurs et les bobines sur le moyen de fixation adapté à l'embase (EM1), mais il est aussi requis de pouvoir venir passer, insérer, sertir des brins de câbles électriques des bobines vers des modules externes (LE) au travers d'ouvertures de la paroi (supérieure ici pour DE1) et d'autres éléments isolants prévus à cet effet. Il est donc plus facile pour un opérateur de réaliser ces exercices en passant son bras ou un outil depuis le bas gauche de la demi-enveloppe (DE1) vers la surface supérieure interne de ladite demi-enveloppe.

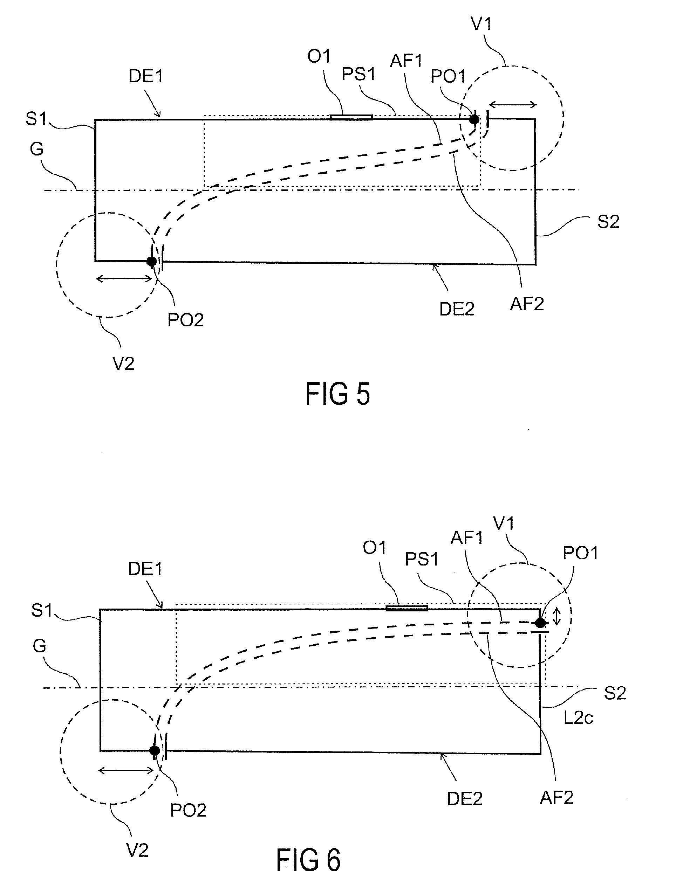

Enfin, les **figures 5 et 6** présentent deux alternatives possibles de principe de conception sous des vues de côté d'un second et troisième arrangement selon l'invention telle que décrites aux figures 3 et 4 et comprenant une première demi-enveloppe (DE1) couplée à une deuxième demi-enveloppe (DE2). Principalement, ces deux derniers arrangements prévoit que la première demi-enveloppe (DE1) comprend une première arête de fixation (AF1) solidarisable à une deuxième arête de fixation (AF2) de l'autre demi-enveloppe (DE2),
ladite première arête formant un contour continu en surface de la paroi tubulaire (PT),
ladite première arête (AF1) passant au moins par deux points (PO1, P02) de ladite surface, un des points (PO1) étant disposé dans un premier voisinage (V1) de la première section d'extrémité au-dessus de l'axe de révolution et l'autre point (PO2) étant disposé dans un deuxième voisinage (V2) de la deuxième section d'extrémité au-dessous de l'axe de révolution.

Principalement dans la pratique pour le choix des positions optimales des points (PO1, P02), le premier voisinage (V1) peut être compris dans la moitié supérieure droite de la partie tubulaire (PT) au-dessus de l'axe de révolution (G) et le deuxième voisinage (V2) peut être compris dans la moitié inférieure gauche de la partie tubulaire (PT) au-dessous de l'axe de révolution (G), ici supposé horizontal pour des raisons de clarté de l'exposé de l'invention.

Idéalement afin de maximiser une accessibilité entre la paroi tubulaire de la demi-enveloppe (DE1) et le volume (V), il est suffisant de disposer le premier point (PO1) sur une génératrice en partie haute de la paroi tubulaire (PT), particulièrement au plus proche d'un point d'accès à optimiser, tel que l'ouverture (O1) selon figure 5.

Dans ces deux exemples, il est ainsi montré que la forme de la première demi-enveloppe (DE1) est aisément adaptable en dimension au moins selon une longueur horizontale voire verticale (le point P01 est choisi sur des faces différentes de la capsule, par exemple en partie supérieure horizontale de paroi tubulaire selon figure 5 ou à un niveau vertical supérieur de la section S2 au-dessus de l'axe de révolution G) en fonction des composants électriques venant à y être disposés et maintenus et en fonction des conditions souhaitées pour leur accessibilité selon l'invention. De même, le deuxième point (PO2) est aussi disposé suivant les exigences des composants électriques et des conditions souhaitées pour leur accessibilité selon l'invention.

## Revendications

1. Arrangement d'enveloppe métallique sous forme d'une capsule ayant une paroi tubulaire (PT) selon un axe de révolution (G) principale horizontale et s'étendant sous une longueur totale définie entre une première et une deuxième sections d'extrémité (S1, S2), ladite enveloppe étant apte à encapsuler un ensemble de composants électriques disposés sous un volume (V) s'étendant de façon coaxiale à l'axe de révolution entre les deux sections d'extrémité,
**caractérisé en ce que**
l'enveloppe se compose d'au moins deux demi-enveloppes amovibles dont au moins une première demi-enveloppe (DE1) est composée au moins d'une partie supérieure (PS1) de la paroi tubulaire au-dessus de l'axe de révolution et d'une embase de maintien (EM1) de l'ensemble de composants électriques, la dite embase étant attenante à une seule (S1) des deux sections d'extrémité de l'enveloppe.

2. Arrangement selon revendication 1, pour lequel la partie supérieure (PS1) de la paroi tubulaire présente avec le volume (V) un interstice (I1) suffisant dimensionné pour y introduire au moins un bras d'un opérateur ou/et un quelconque autre outil, idéalement pour faire accéder des moyens de liaison électrique depuis l'ensemble de composants électriques vers au moins une ouverture (O1) de ladite partie supérieure de paroi.

3. Arrangement selon revendication 1, pour lequel l'embase de maintien est couplable à un moyen de fixation adapté à maintenir l'ensemble de composants électriques sous le volume (V).

4. Arrangement selon revendication 1, pour lequel l'ensemble de composants électriques comprend un ensemble de transformation électrique de courant, constitué par :
- au moins un conducteur électrique (C1, C2, C3) longiligne étant coaxialement disposé à l'axe de révolution principale de l'enveloppe et dont une extrémité est solidarisée à l'embase de maintien (EM1),
- au moins une bobine (B1, B2, B3) de transformation de courant étant disposée autour du conducteur et recouvrant une majeure longueur du conducteur électrique.

5. Arrangement selon revendication 1 pour lequel la première demi-enveloppe (DE1) comprend une première arête de fixation (AF1) solidarisable à une deuxième arête de fixation (AF2) de l'autre demi-enveloppe (DE2),
ladite première arête formant un contour continu en surface de la paroi tubulaire (PT),
ladite première arête (AF1) passant au moins par deux points (PO1, P02) de ladite surface, un des points (P01) étant disposé dans un premier voisinage (V1) de la première section d'extrémité au-dessus de l'axe de révolution et l'autre point (P02) étant disposé dans un deuxième voisinage (V2) de la deuxième section d'extrémité au-dessous de l'axe de révolution.

6. Arrangement selon revendication 5 pour lequel le premier voisinage (V1) est compris dans la moitié supérieure droite de la partie tubulaire (PT) au-dessus de l'axe de révolution (G) et le deuxième voisinage (V2) est compris dans la moitié inférieure gauche de la partie tubulaire (PT) au-dessous de l'axe de révolution (G) supposé horizontal.

7. Arrangement selon revendication 1 pour lequel les deux demi-enveloppes (DE1, DE2) ont une géométrie identique.
